# EUROPÄISCHE PATENTSCHRIFT

(11) **EP 0 387 240 B1**
(45) Veröffentlichungstag und Bekanntmachung des Hinweises auf die Patenterteilung: **05.01.1994**
(21) Anmeldenummer: 90890056.6
(22) Anmeldetag: 06.03.1990
(51) Int. Cl.: F16N 39/06

(54) **Anordnung für ein hydraulisches Druckmittel bzw. Schmieröl aufnehmende Flüssigkeitsbehälter**
Arrangement for a liquid-container receiving a hydraulic pressure agent, especially a lubricating oil
Aménagement de réservoir de liquide recevant un moyen de pression hydraulique, notamment de l'huile de graissage

(30) Priorität: 08.03.1989 AT 519/89
(43) Veröffentlichungstag der Anmeldung: 12.09.1990
(73) Patentinhaber: STEYR-DAIMLER-PUCH AKTIENGESELLSCHAFT, 1010 Wien (AT)
(72) Erfinder: Gartner, Helfried, A-3321 Ardagger Markt (AT); Wöntner, Gebhard, A-4493 Wolfern (AT)

(56) Entgegenhaltungen:
- DE-A- 3 709 626
- GB-A- 14 820
- GB-A- 27 589
- US-A- 2 675 886
- PATENT ABSTRACTS OF JAPAN vol. 7, no. 116 (M-216)(1261) 20 Mai 1983,& JP-A-58 34295 (NISSAN) 28 Februar 1983,

## Beschreibung

Die Erfindung betrifft eine Anordnung für ein hydraulisches Druckmittel bzw. Schmieröl aufnehmende Flüssigkeitsbehälter, bei der in einer zumindest teilweise oberhalb des Flüssigkeitsspiegels liegenden Filterkammer ein ringförmiger Filtereinsatz vorgesehen ist, in den eine Saugleitung aus dem Flüssigkeitssumpf führt, wobei die Filterkammer und der Filtereinsatz durch einen Deckel verschließbar sind und die Filterkammer über eine weitere Saugleitung an einer Pumpe angeschlossen ist.

Bei einer bekannten Anordnung dieser Art (DE-A- 37 09 626), die für ein Schaltgetriebe mit hydraulisch betätigten, von einer Pumpe mit dem erforderlichen Drucköl versorgten Reibungskupplungen bestimmt ist, führt die eine Saugleitung zwar aus dem Ölsumpf in den Filtereinsatz, sie hat aber keinerlei weitere Aufgabe zu erfüllen. Die Unterbringung des Filtereinsatzes in der eigenen Filterkammer hat nur den Zweck, das Filter nach Abnahme des Deckels herausnehmen bzw. auswechseln zu können, ohne vorher das Öl aus dem Flüssigkeitsbehälter bzw. Getriebe absaugen oder ablassen zu müssen.

Demgegenüber liegt der Erfindung die Aufgabe zugrunde, die eingangs geschilderte Anordnung mit den ohnehin vorhandenen Mitteln so zu verbessern, daß der Flüssigkeitsbehälter gefüllt oder entleert werden kann, ohne schwierige Manipulationen vornehmen zu müssen.

Die Erfindung löst die gestellte Aufgabe dadurch, daß der Rand der Filterkammer zu einem Einfüllstutzen hochgezogen ist und daß die Saugleitung aus dem Flüssigkeitssumpf aus einem im Sumpfbereich mit Seitenöffnungen versehenen, im Flüssigkeitsbehälter schraubverstellbar gelagerten Rohr besteht, das einen Verschlußkörper für eine untere Ablaßöffnung des Flüssigkeitsbehälters trägt.

Das Schmieröl bzw. das hydraulische Druckmittel kann also bei abgenommenem Deckel in den Flüssigkeitsbehälter eingefüllt werden, wobei die Flüssigkeit durch das sonst die Saugleitung aus dem Flüssigkeitssumpf bildenden Rohr in den Flüssigkeitsbehälter fließt, in den es aus dem Rohr durch dessen Seitenöffnungen im Sumpfbereich austreten kann. Da aber das Rohr schraubverstellbar gelagert ist und den Verschlußkörper für die untere Ablaßöffnung des Flüssigkeitsbehälters trägt, kann außerdem mit der ganzen Anordnung auch die Flüssigkeit aus dem Flüssigkeitsbehälter abgelassen werden, weil ja nur das Rohr zum Abheben des Verschlußkörpers von der Ablaßöffnung hochgeschraubt zu werden braucht.

Um schaumbildende Luftbläschen und gegebenenfalls gröbere Verunreinigungen vom Filtereinsatz fernzuhalten, sind in weiterer Ausbildung der Erfindung die Seitenöffnungen des die Saugleitung aus dem Flüssigkeitssumpf bildenden Rohres von einem Grobfilter umschlossen.

Besonders zweckmäßig ist es, wenn der Verschlußkörper als in seinem unteren Teil hohler, nach unten offener Stopfen ausgebildet ist, der am oberen Hohlraumende seitliche Durchtrittsöffnungen aufweist. Beim Hochschrauben des Rohres und damit des Verschlußkörpers kann die Flüssigkeit durch die seitlichen Durchtrittsöffnungen in den hohlen Teil des Stopfens eintreten und diesen in einem geschlossenen Strahl ohne Verspritzen verlassen.

Dabei ist es auch möglich, daß der untere Teil des Stopfens als Schlauchtülle ausgebildet und durch einen ihn mit Abstand umschließenden Behälterkragen geschützt ist, so daß das Ablassen der Flüssigkeit in jeden beliebigen Auffangbehälter erfolgen kann, wobei der Kragenschutz bei tief gelegenen Flüssigkeitsbehältern von Fahrzeugen besondere Bedeutung hat. Es ist selbstverständlich, daß es bei der erfindungsgemäßen Ausbildung mit dem Rohr möglich ist, den Ablaßvorgang durch Abwärtsschrauben des Rohres jederzeit zu unterbrechen, was bei üblichen Konstruktionen mit einer einfachen Ölablaßschraube keineswegs der Fall ist.

Um das schraubverstellbare Rohr einfach betätigen zu können, ist erfindungsgemäß das obere Rohrende zu einem Schlüsselansatz verformt und der Stopfen unterhalb der Ablaßöffnung des Flüssigkeitsbehälters mit einem Anschlag zur Hubbegrenzung versehen.

In weiterer Ausbildung der Erfindung ist schließlich in dem von dem die Saugleitung bildenden Rohr in einer Gewindebohrung durchsetzten Boden der Filterkammer ein bei hochgeschraubtem Rohr offener Kanal vom inneren Ringraum des Filtereinsatzes zum Ölsumpf angeordnet. Dadurch wird erreicht, daß beim Öffnen der Ablaßöffnung durch Hochschrauben des Rohres auch die Altflüssigkeit aus dem inneren Ringraum des Filtereinsatzes unbehindert abfließen kann.

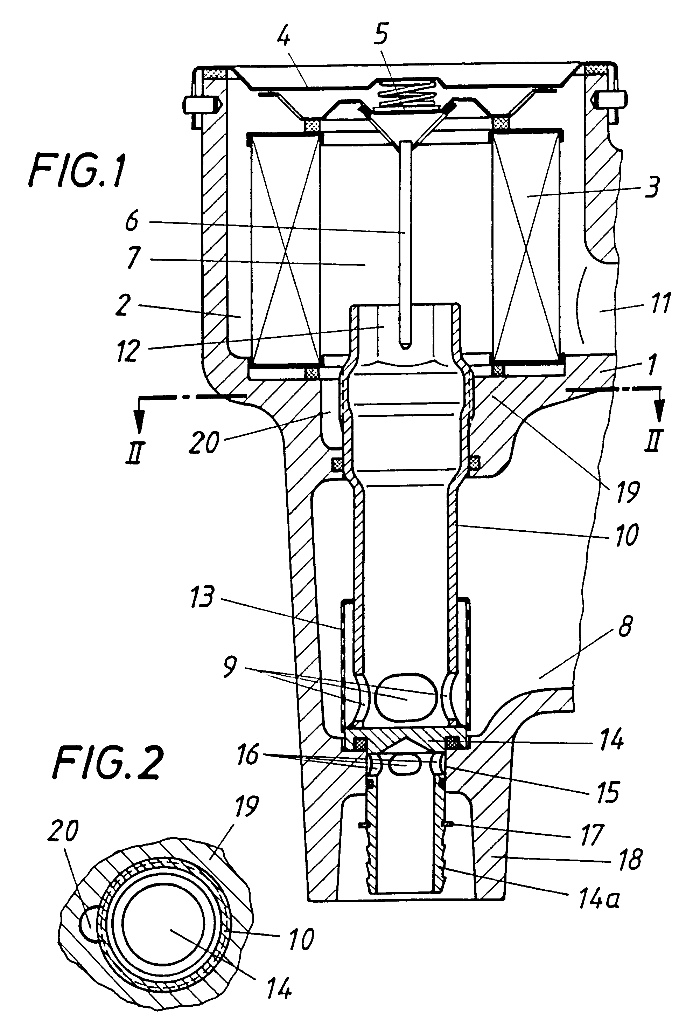

In der Zeichnung ist der Erfindungsgegenstand in einem Ausführungsbeispiel dargestellt, und zwar zeigen
- Fig. 1: die erfindungswesentlichen Teile eines Flüssigkeitsbehälters im Vertikalschnitt und
- Fig. 2: einen Teilquerschnitt nach der Linie II-II der Fig. 1.

Bei einem zur Aufnahme von Schmieröl oder hydraulischem Druckmittel dienenden Behälter 1 ist in einer eigenen zumindest teilweise oberhalb des Flüssigkeitsspiegels liegenden Filterkammer 2 ein ringförmiger Filtereinsatz 3 vorgesehen. Die Filterkammer 2 und der Filtereinsatz 3 sind durch einen Deckel 4 verschließbar, wobei am Deckel 4 noch ein Bypassventil 5 angeordnet und ein Ölmaßstab 6 befestigt sein kann. In den inneren Ringraum 7 des Filtereinsatzes 3 führt eine Saugleitung aus dem Ölsumpf 8, die aus einem im Sumpfbereich mit Seitenöffnungen 9 versehenen Rohr 10 besteht, das im Flüssigkeitsbehälter 1 schraubverstellbar gelagert ist, also aus der dargestellten Stellung bei abgenommenem Deckel 4 hochgeschraubt werden kann. Die Filterkammer ist über eine weitere Saugleitung 11 an einer nicht dargestellte Pumpe angeschlossen.

Das obere Ende des Rohres 10 ist zu einem Schlüsselansatz 12 verformt. Die im Sumpfbereich vorgesehenen Seitenöffnungen 9 sind von einem Grobfilter 13 umschlossen. Das Rohr 10 trägt an seinem unteren Ende einen als Stopfen 14 ausgebildeten Verschlußkörper für eine untere Ablaßöffnung 15 des Flüssigkeitsbehälters 1. Der Stopfen 14 ist in seinem unteren, als Schlauchtülle 14a dienenden Teil nach unten offen hohl ausgebildet, wobei am oberen Hohlraumende seitliche Durchtrittsöffnungen 16 vorgesehen sind. Ein Sprengring 17 od.dgl. dient zur Hubbegrenzung, und die ganze Schlauchtülle 14a ist mit Abstand von einem Behälterkragen 18 umschlossen.

Da der Rand der Filterkammer 2 zu einem Einfüllstutzen hochgezogen ist, kann das Schmieröl bzw. das hydraulische Druckmittel bei abgenommenem Deckel 4 in den Flüssigkeitsbehälter 1 eingefüllt werden. Zum Ablassen der Flüssigkeit aus dem Flüssigkeitsbehälter 1 ist es bloß erforderlich, das Rohr 10 so weit hochzuschrauben, bis der Sprengring 17 od. dgl. am unteren Rand der Ablaßöffnung 15 anliegt, so daß die Flüssigkeit durch die Öffnungen 16 und den Hohlraum der Schlauchtülle 14a abfließen kann. In dem vom Rohr 10 in einer Gewindebohrung durchsetzten Boden 19 der Filterkammer 2 ist noch ein bei hochgeschraubtem Rohr 10 offener Kanal 20 angeordnet, um den Abfluß der Altflüssigkeit aus dem inneren Ringraum 7 des Filtereinsatzes 3 zu ermöglichen.

## Patentansprüche

1. Anordnung für ein hydraulisches Druckmittel bzw. Schmieröl aufnehmende Flüssigkeitsbehälter, bei der in einer zumindest teilweise oberhalb des Flüssigkeitsspiegels liegenden Filterkammer ein ringförmiger Filtereinsatz vorgesehen ist, in den eine Saugleitung aus dem Flüssigkeitssumpf führt, wobei die Filterkammer und der Filtereinsatz durch einen Deckel verschließbar sind und die Filterkammer über eine weitere Saugleitung an einer Pumpe angeschlossen ist, dadurch gekennzeichnet, daß der Rand der Filterkammer (2) zu einem Einfüllstutzen hochgezogen ist und daß die Saugleitung aus dem Flüssigkeitssumpf (8) aus einem im Sumpfbereich mit Seitenöffnungen (9) versehenen, im Flüssigkeitsbehälter (1) schraubverstellbar gelagerten Rohr (10) besteht, das einen Verschlußkörper (14) für eine untere Ablaßöffnung (15) des Flüssigkeitsbehälters (1) trägt.

2. Anordnung nach Anspruch 1, dadurch gekennzeichnet, daß die Seitenöffnungen (9) des die Saugleitung aus dem Flüssigkeitssumpf (8) bildenden Rohres (10) von einem Grobfilter (13) umschlossen sind.

3. Anordnung nach Anspruch 1, dadurch gekennzeichnet, daß der Verschlußkörper als in seinem unteren Teil (14a) hohler, nach unten offener Stopfen (14) ausgebildet ist, der am oberen Hohlraumende seitliche Durchtrittsöffnungen (16) aufweist.

4. Anordnung nach Anspruch 3, dadurch gekennzeichnet, daß der untere Teil des Stopfens (14) als Schlauchtülle (14a) ausgebildet und durch einen ihn mit Abstand umschließenden Behälterkragen (18) geschützt ist.

5. Anordnung nach Anspruch 3, dadurch gekennzeichnet, daß das obere Rohrende zu einem Schlüsselansatz (12) verformt und der Stopfen (14) unterhalb der Ablaßöffnung (15) des Flüssigkeitsbehälters (1) mit einem Anschlag (17) zur Hubbegrenzung versehen ist.

6. Anordnung nach einem der Ansprüche 1 bis 5, dadurch gekennzeichnet, daß in dem von dem die Saugleitung bildenden Rohr (10) in einer Gewindebohrung durchsetzten Boden (19) der Filterkammer (2) ein bei hochgeschraubtem Rohr (10) offener Kanal (20) vom inneren Ringraum (7) des Filtereinsatzes (3) zum Ölsumpf (8) angeordnet ist.

## Claims

1. Arrangement for a receptacle containing a hydraulic pressure fluid or lubricating oil, in which an annular filter cartridge is housed in a filter chamber situated at a level at least partly above the liquid level, into which leads a suction duct from the sump, said filter chamber and said filter cartridge being lockable by a lid and the filter chamber being connected with a pump by a further suction duct, caracterized in that the edge of the filter chamber (2) is raised to form a filling-hole and in that the suction duct from the sump (8) consists of a tube (10) screwably adjustable in the receptacle (1) and provided with lateral openings (9) in the region of the sump, said tube (10) carrying a closure means (14) for a bottom drain opening (15) of the receptacle (1).

2. Arrangement according to claim 1, caracterized in that the lateral openings (9) of the tube (10) constituting the suction duct from the sump (8) are enclosed by a coarse filter (13).

3. Arrangement according to claim 1, caracterized in that the lower part (14a) of the closure means is a hollow plug (14) whose cavity is facing downwards, said plug presenting lateral passages (16) from the top end of the hollow cavity.

4. Arrangement according to claim 3, caracterized in that the lower part of the plug (14) is profiled as a hose liner (14a) and is protected by a surrounding spaced collar (18) of the receptacle.

5. Arrangement according to claim 3, caracterized in that the top end of the tube is deformed into a key face (12) and in that the plug (14) is provided with a stop (17) for limiting its lift below the drain hole (15).

6. Arrangement according to any of the claims 1 to 5, caracterized in that a channel (20) leading from the inner annular space of the filter cartridge to the sump (8) is disposed in the bottom (19) of the filter chamber (2), a tap hole in said bottom being penetrated by the tube (10) constituting the suction duct, said channel being open, when the tube is in a lifted position.

## Revendications

1. Dispositif pour un réservoir destiné à recevoir un fluide à pression hydraulique ou de l'huile de lubrification, dans lequel est prévu dans une chambre de filtration disposée au moins partiellement à un niveau supérieur à la nappe de fluide, une cartouche de filtre annulaire, dans laquelle débouche une conduite d'aspiration à partir du carter de fluide, la chambre de filtration et la cartouche de filtre étant susceptible d'être fermée et la chambre de filtration étant reliée à une pompe par une autre conduite d'aspiration, caractérisé en ce que le bord de la chambre de filtration (2) est prolongé en haut pour former un manchon de remplissage et que la conduite d'aspiration à partir du carter de fluide (8) est constituée d'un tube (10) présentant des ouvertures latérales (9) dans la région du carter et susceptible d'être ajusté par vissage dans le reservoir (1), ledit tube étant muni d'un corps de fermeture (14) pour une ouverture de vidange (15) inférieure du réservoir (1).

2. Dispositif selon la revendication 1, caractérisé en ce que les ouvertures latérales (9) du tube (10) constituant la conduite d'aspiration à partir du carter de fluide sont renfermés par un filtre gros (13).

3. Dispositif selon la revendication 1, caractérisé en ce que le corps de fermeture est conformé dans sa partie inférieure (14a) comme bouchon (14) creux et ouvert en bas, présentant au bout supérieur de la partie creuse des ouvertures de passage latérales (16).

4. Dispositif selon la revendication 3, caractérisé en ce que la partie inférieure du bouchon (14) est conformé comme douille de tuyau (14a) et protégée par un collet de reservoir (18) l'entourant avec un écart.

5. Dispositif selon la revendication 3, caractérisé en ce que le bord supérieur du tube est déformé en embout de clef (12) et le bouchon (14) est pourvu, en dessous de l'ouverture de vidange (15) du réservoir, d'une butée (17) destinée à limiter la course, .

6. Dispositif selon l'une des revendications l à 5, caractérisé en ce que dans le fond (19) de la chambre de filtration (2) pénétré dans un alésage taraudé par le tube (10) constituant la conduite d'aspiration, est disposé un canal (20) reliant la chambre annulaire inférieure (7) de la cartouche de filtre (3) au carter d'huile qui est ouvert quand le tube (10) est dans une position élevée.
